Europäisches Patentamt

European Patent Office

Office européen des brevets

(19)

(11) Veröffentlichungsnummer: **0 301 318 B1**

## EUROPÄISCHE PATENTSCHRIFT

(12)

(45) Veröffentlichungstag der Patentschrift: **30.09.92**

(51) Int. Cl.5: **H02K 9/18**, H02K 9/04

(21) Anmeldenummer: **88111245.2**

(22) Anmeldetag: **13.07.88**

(54) **Elektrische Maschine mit einem Wärmetauscher.**

(30) Priorität: **27.07.87 DE 8710281 U**

(43) Veröffentlichungstag der Anmeldung:
**01.02.89 Patentblatt 89/05**

(45) Bekanntmachung des Hinweises auf die Patenterteilung:
**30.09.92 Patentblatt 92/40**

(84) Benannte Vertragsstaaten:
**CH DE ES FR GB IT LI**

(56) Entgegenhaltungen:
**DE-A- 3 007 917**
**FR-E- 93 079**
**GB-A- 412 228**
**US-A- 4 250 422**

(73) Patentinhaber: **SIEMENS AKTIENGESELL-SCHAFT**
**Wittelsbacherplatz 2**
**W-8000 München 2(DE)**

(72) Erfinder: **Burmester, Jürgen, Dr.**
**Am Hasensprung 5**
**W-8740 Bad Neustadt(DE)**
Erfinder: **Ludwig, Felix**
**Schönbornstrasse 60**
**W-8730 Bad Kissingen(DE)**
Erfinder: **Wartenberg, Dietrich, Dr.**
**Grubenweg 4**
**W-8740 Bad Neustadt(DE)**

EP 0 301 318 B1

## Beschreibung

Die Erfindung betrifft eine elektrische Maschine gemäß dem Oberbegriff des Anspruchs 1.

Eine solche Maschine ist durch die DE-OS 30 07 917 bekannt. Bei dieser Maschine ist der Kühlventilator auf der einen Stirnseite des Wärmetauschers angebaut und der Kühlluftstrom wird von dieser Stirnseite her über die volle axiale Länge des Wärmetauschers durch diesen hindurchgeführt und dann in den freien Raum ausgeblasen.

Der Erfindung liegt die Aufgabe zugrunde, ohne Erhöhung der Antriebsleistung des Kühlventilators eine Verbesserung der Kühlung der Maschine zu erreichen.

Die Lösung der gestellten Aufgabe gelingt nach der Erfindung durch die im Kennzeichen des Anspruchs 1 angegebenen Merkmale. Durch die Anordnung des Kühlventilators über dem elektrisch aktiven Teil der Maschine besteht die Möglichkeit, einen Teil der Ausblasluft des Kühlventilators tangential über die Maschinenlängsseiten zu lenken, so daß diese durch die vorbeistreichende Luft zusätzlich gekühlt werden.

Durch die Anordnung des Kühlventilators im Mittelbereich des Wärmetauschers wird das Ansaugen der Kühlluft von beiden Stirnseiten des Wärmetauschers her ermöglicht. Damit steht der doppelte Ansaugquerschnitt zur Verfügung, wodurch die Strömungsverluste vermindert werden und der Gesamtkühlluftstrom erheblich (ca. 50 %) erhöht wird. Das Ansaugen von zwei Seiten hat den Vorteil, daß beide Seiten des Wärmetauschers mit Kaltluft beaufschlagt werden, wodurch dessen Kühlwirkung verbessert wird. Die erforderliche Antriebsleistung des Kühlventilators ist trotz erhöhten Gesamtkühlluftstromes geringer, weil die Anströmverhältnisse des Ventilators günstiger sind.

Anhand eines in der Zeichnung dargestellten Ausführungsbeispieles wird der Anmeldungsgegenstand nachfolgend näher beschrieben. Es zeigt:

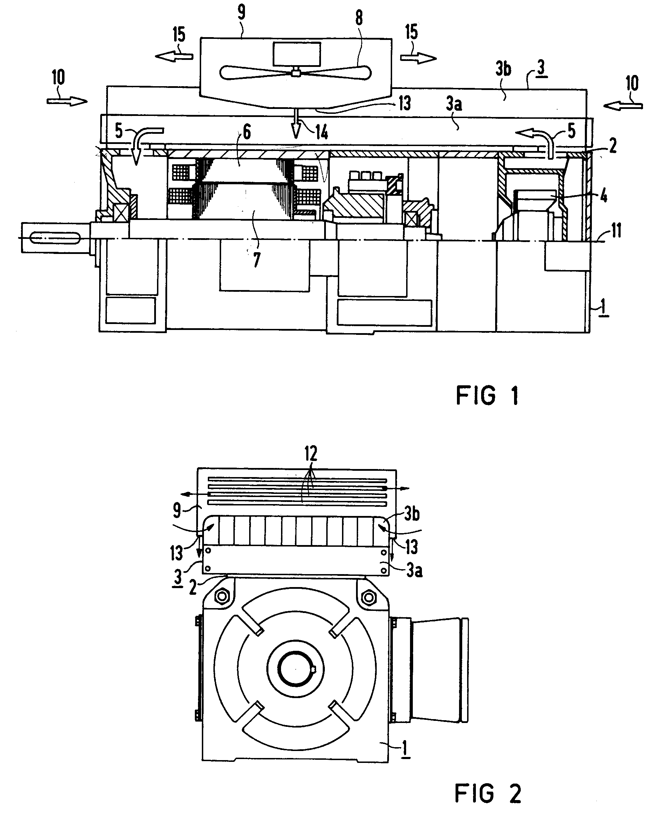

FIG 1    eine elektrische Maschine in Seitenansicht und

FIG 2    eine Stirnansicht dieser Maschine.

Mit 1 ist eine elektrische Maschine bezeichnet, auf deren Oberseite 2 ein Wärmetauscher 3 montiert ist. Der Wärmetauscher 3 besitzt eine Primärseite 3a und eine Sekundärseite 3b. Die Primärseite 3a wird von einem im Maschinengehäuse durch einen Maschinenventilator 4 erzeugten Luftstrom, der durch Pfeile 5 angedeutet ist, durchströmt.

Im Bereich des Ständers 6 und Läufers 7 der Maschine 1 ist auf der der Maschine 1 abgekehrten Seite des Wärmetauschers 3 ein Kühlventilator 8 angebaut, der mit einer Abdeckhaube 9 versehen ist. Dieser Kühlventilator 8 saugt von den beiden Stirnseiten des Wärmetauschers 3 her Kühlluft (Pfeile 10) über dessen Sekundärseite 3b an. Die Abdeckhaube 9 ist so gestaltet, daß sie außer parallel zur Längsachse 11 der Maschine 1 gerichteten Auslaßöffnungen 12 noch weitere Auslaßöffnungen 13 aufweist, die auf die unterhalb des Wärmetauschers 3 liegende Maschine 1 gerichtet sind. Die seitliche Lage jeder dieser weiteren Auslaßöffnungen 13 gegenüber der Maschinenachse 11 entspricht der halben Breite der elektrischen Maschine 1. Somit streicht die aus diesen weiteren Auslaßöffnungen 13 austretende Kühlluft (Pfeile 14) tangential am Gehäuse der Maschine 1 vorbei und bewirkt eine zusätzliche Kühlung derselben.

Die übrige Kühlluft (Pfeile 15) verläßt die Abdeckhaube 9 über die Auslaßöffnungen 12. Durch entsprechende Bemessung der Querschnitte der Auslaßöffnungen 12 und 13 kann die Kühlluftmenge bestimmt werden, die über die Auslaßöffnungen 12 bzw.13 abströmen soll.

## Patentansprüche

1.   Elektrische Maschine mit einem Wärmetauscher, der auf der Oberseite (2) der Maschine (1) angeordnet und primärseitig durch den im Maschinengehäuse unter dem Einfluß eines Maschinenventilators (4) zirkulierenden Luftstrom und sekundärseitig durch einen von einem außen am Wärmetauscher (3) angebauten, mit einer Abdeckhaube versehenen Kühlventilator (8) erzeugten Luftstrom beaufschlagt ist,
**dadurch gekennzeichnet,**
daß der Kühlventilator (8) mit seiner Abdeckhaube (9) in dem Bereich über dem Ständer (6) und Läufer (7) der Maschine (1) auf der der Maschine (1) abgekehrten Längsseite des Wärmetauschers (3) an diesem angebaut und der Kühlluftstrom von beiden Stirnseiten des Wärmetauschers (3) her durch diesen angesaugt ist, daß ferner zumindest ein Teil (14) der Ausblasluft durch die Abdeckhaube tangential auf die beiden Längsseiten der Maschine (1) gelenkt ist.

2.   Elektrische Maschine nach Anspruch 1, **dadurch gekennzeichnet,** daß der Kühlventilator (8) im Mittenbereich des Wärmetauschers (3) angeordnet ist.

## Claims

1.   An electric machine with a heat exchanger, which heat exchanger is arranged on the upper side (2) of the machine (1) and is acted upon, on the primary side, by the air flow circulating in the machine housing under the influence of a machine ventilator (4) and, on the secondary side, by an air flow generated by a cooling ventilator (8) provided with a covering hood and built onto the outside of the heat exchanger (3),

characterised in that the cooling ventilator (8) with its covering hood (9) is built onto the longitudinal side of the heat exchanger (3), directed away from the machine (1), in the region over the stator (6) and rotor (7) of the machine (1), the cooling air flow being sucked through the cooling ventilator (8) from both ends of the heat exchanger (3), so that consequently at least a portion (14) of the exhaust air is directed through the covering hood tangentially onto both longitudinal sides of the machine (1).

2. An electric machine according to claim 1, characterised in that the cooling ventilator (8) is arranged in the central region of the heat exchanger (3).

**Revendications**

1. Machine électrique à échangeur de chaleur, qui est disposé du côté supérieur (2) de la machine (1) et qui est alimenté, du côté primaire, par le courant d'air circulant dans le bâti de la machine sous l'action d'un ventilateur de machine (4) et, du côté secondaire, par un courant d'air produit par un ventilateur de refroidissement (8) monté à l'extérieur sur l'échangeur de chaleur (3) et muni d'un capot,

caractérisée,

en ce que le ventilateur de refroidissement (8) est monté, avec son capot (9), sur l'échangeur de chaleur (3), dans la partie au-dessus du stator (6) et du rotor (7) de la machine, sur le grand côté longitudinal de l'échangeur de chaleur (3) éloigné de la machine (1) et le courant d'air de refroidissement est aspiré dans l'échangeur de chaleur (3) par les deux côtés frontaux de celui-ci, en ce que, en outre, au moins une partie (14) de l'air soufflé est guidée par le capot tangentiellement sur les deux grands côtés de la machine (1).

2. Machine électrique suivant la revendication 1, caractérisée en ce que le ventilateur de refroidissement (8) est disposé dans la partie centrale de l'échangeur de chaleur (3).

EP 0 301 318 B1

FIG 1

FIG 2

4